# EUROPEAN PATENT APPLICATION

(11) **EP 0 714 220 A2**
(43) Date of publication of application: **29.05.1996**
(21) Application number: 95118417.5
(22) Date of filing: 23.11.1995
(51) Int. Cl.: H04Q 11/04

(54) **Device for the execution of ATM functions**

(30) Priority: 24.11.1994 IT TO940944
(71) Applicant: ITALTEL SOCIETA ITALIANA TELECOMUNICAZIONI s.p.a., I-20149 Milano (IT)
(72) Inventor: Collivignarelli, Marco, I-28040 Dormelletto (NO) (IT); Licciardi, Luigi, I-13100 Vercelli (IT); Marchisio, Mauro, I-10100 Torino (IT); Pipino, Alberto, I-10050 Chiusa di san Michele (TO) (IT); Zappalorto, Alessandro, I-10100 Torino (IT)
(74) Representative: Giustini, Delio

(57) **Abstract**

The device for processing ATM functions is able to exchange ATM cells with a physical layer interface and with an interface to the switching network subjecting the cells in ATM format to the header translation by means of suitable accesses to an external transcode memory and a translation memory so as to convert them in proprietary format. The converted cells are than sent to the interface to the switching network.

Analogously, the cells are converted from the proprietary format in cells of the ATM format by means of appropriate accesses to a switching memory. The converted cells are than sent to the physical layer interface.

The device communicates through interface logics with a block for the control of traffic parameters and with a control microprocessor.

## Description

### Field of the Invention

The present invention related to telecommunication systems using digital signals arranged in packets for the transmission of voice, video and data signals, and in particular it is related to a device for the processing of ATM functions.

The fast cell switching technique called ATM according to the initials of the definition "Asynchronous Transfer Mode" is getting a more and more important role for the integrated switching of digital flows belonging to transmission services of voice, video and data signals with different bandwidth requirements and differentiated traffic characteristics.

The ATM technique is now generally considered as the solution for the implementation of the broadband ISDN network, called B-ISDN. It is an efficient fast package switching technique handling entities of fixed length, called cells, and combining several of the advantages offered by conventional circuit and packet switching techniques.

Due to the flexibility of packet switching technique, it is therefore possible to handle whatever type of information through a single switching technique within an integrated network structure and which is independent from the bit rate; in particular the ATM technique allows to manage connections with variable bit rate.

The resources offered by the switching system are not rigidly dedicated to a single call for the total of its duration, as in the circuit switching systems, but they are only applied at the real moment when it is needed to transmit information.

As already known, this technique foresees that the information related to the various services is arranged in contiguous units with a fixed length of about 400 bits, termed cells. A single cell including an information field and a heading field, called header, carrying the information needed for the routing through the switching network and other service information.

In particular, in switching networks based on the ATM technique, the cells of a specific connection, active on a link of the network, are identified by the whole of two bit sequences, called VPI (Virtual Path Identifier) and VCI (Virtual Channel Identifier), respectively. The size of the VPI is 8 or 12 bits according to the type of interface originating or terminating the link, called UNI User Network Interface) or NNI (Network Node Interface), respectively. The size of the VCI is always 16 bits, independently on the type of interface. These specifications may be found in the Recommendation ITU-T I.361 - "ATM layer specification for B-ISDN".

In an ATM network interface, the cell management depends on the connection they belong. Typically the cell management requires to access data univocally associated to the connection to which the cell belongs, which are contained in tables. Additionally sometimes it is required to access data also based on the cell type within the specific connection.

The processing of the information included in the header field is needed to guarantee the performance defined at ATM layer, assuring the maintenance of the connection also if there is any failure, as well as to add all the information needed to manage the cell inside the switching system. Such information is first of all, but non exclusively, finalized to route the cell to a predetermined output exchange termination.

The above-mentioned performance at ATM layer are essential elements for the definition of the service quality expressed in terms of cell loss probability and crossing delay of the cells themselves, in line with the band used by the specific connection. In fact, in networks based on ATM technique, the band assigned to each connection is determined during the set up step and is controlled for all the duration of the connection in order to avoid to use it in a higher amount than the defined one. This could happen if there are any failures in the user equipment or in case of real fraudulent behaviour. The above-mentioned control is useful to avoid the network resource abuse is the cause of congestion symptoms which further to the fact of provoking losses of parts of the cells of the fraudulent user would penalize in terms of system performances the other users.

According to the ATM technique, s single connection is identified by the set of VPI and VCI values on an output link, which is different from the set of VPI and VCI values on the input link. The processing of the cells in the interface has as an aim the insertion of new VPI and VCI values in the cell header to be presented on the output link. This operation is known as Label Switching.

Moreover, the cell header processing in the input termination of the exchange is aimed to make possible the transfer of the cell itself to one or more output terminations, or, in certain cases, the transfer to a centralized or peripheric computer.

### Background Art

Different internal formats are generally assigned to the cells, based on the structures used for the exchange equipment.

One example is pointed out by the proceeding entitled "The Concept of Virtual Paths and Virtual Channels in ATM-Networks", by Herbert Schneider, presented at the 1990 International Zurich Seminar on Digital Communications. Here some of the main principles are indicated which are at the basis of ATM switching and some guide lines for the implementation of the translation memory of the cell format. The proceeding proposes possible solutions, but without giving information for implementing devices suitable to carry out cell processing and switching functions.

### Object of the Invention

It is one object of the present invention to overcome the limitation of the know device for processing ATM functions.

### Disclosure of the Invention

The device object of the present invention makes it possible to optimize the size of the memory containing the tables related to each connection and to each interface, manages both cell formats defined at ATM layer, (i.e. the one at the UNI and the one at the NNI) and the proprietary cell format (valid inside the equipment), and carries out traffic parameter controls by interfacing to one or more units for monitoring such parameters.

It is able to transmit the cells towards the switching network or towards a microprocessor either upstream or downstream the circuits which carry out the conversion from the ATM format to the proprietary one, and manages the insertion in the flow directed towards the switching networks of cells coming from the microprocessor, as well as those coming from the input interface (physical layer).

In the opposite direction it is able to transmit the cell towards the input interface or towards the local microprocessor, and it manages the direct insertion towards the input interface of cells coming from the microprocessor, as well as those coming from the switching network.

It generates and checks a sequence number identifying the order of the input into the switching network valid for each single connection. Such number is then examined in the output termination in order to detect the possible loss of one or more cells or the alteration of the original order of input.

Furthermore, it performs the adaptation between the timing of the external line and the internal one of the equipment.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
- figure 1 represents the ATM system where the device object of the invention is inserted;
- figure 2 shows the internal partitioning of the device;
- figure 3 represents the internal architecture of the part of the device called CHPUP;
- figures 4 and 5 represent the internal format of the cell;
- figure 6 shows the internal architecture of the part of the device called CHPDW;
- figure 7 shows the internal architecture of the interface between the device and the external microprocessor.

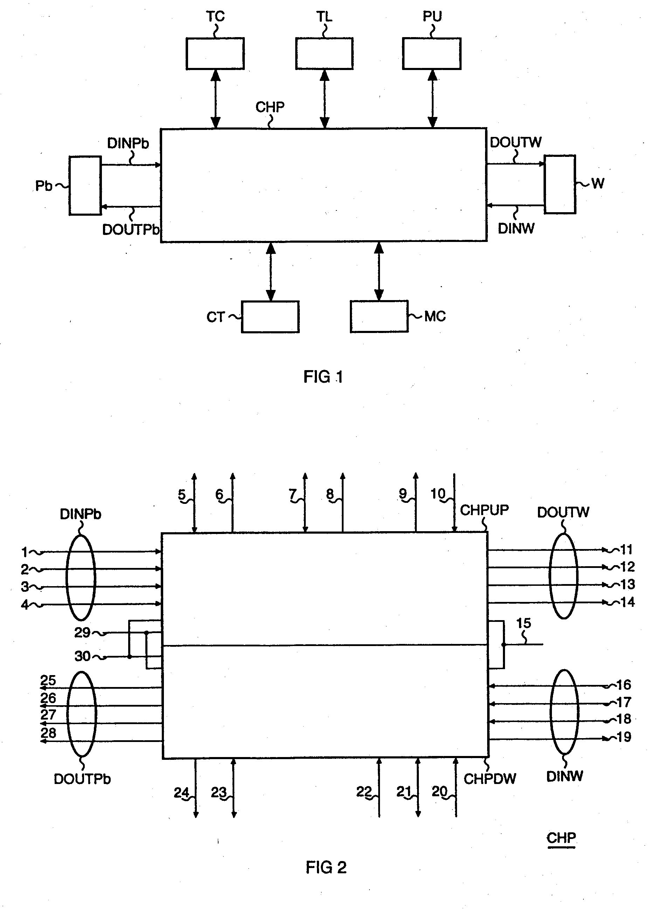

The device for the processing of ATM functions, labelled CHP in figure 1, communicates with an external transcode memory TC, a translation memory TL and a switching memory CT, each one of the RAM type. It communicates moreover with a control microprocessor MC and with a unit PU for the control of the traffic parameters. The device CHP exchanges moreover the cells with a physical layer interface Pb and with an interface W towards the connection network.

By means of the connection DINPb the cells with ATM format set up by 53 bytes reach the device CHP where they are subjected to the label translation by means of suitable accesses to the memory TC and TL. After having checked the conformity of the traffic parameters through the access to unit PU the device CHP transmits the converted cells into the proprietary format to the interface W through the connection DOUTW. Now the cells are set up by 64 bytes, 15 of which are header bytes.

Respectively the cells arriving from interface W, after having been switched and routed by the switching network, are carried to CHP through the connection DINW. By means of suitable accesses to the memory CT CHP carries out suitable label translations so as to recreate the standard ATM format cells (53 bytes). These are forwarded through the connection DOUTPb to the physical layer interface Pb.

The microprocessor MC carries out supervising, monitoring and control functions of the device. The communication between MC and CHP may occur by hand-shake or by interrupt, according to the choice made at the set-up step.

In particular the supervising functions carried out by the microprocessor MC are:
- forwarding of test, metasignalling and signalling cells towards both interfaces Pb and W with the suitable cell format;
- set-up of the device and definition of its configuration.

The monitoring functions are:
- extraction of the test and signalling cells by the interfaces Pb and W;
- analysis of the cell copy which the device transmits to one or both interfaces Pb and W after having carried out the label translation.

The control functions consist essentially in the interrogation of the device concerning its internal state.

The device CHP performs the following operations required by the microprocessor MC:
- setting-up the memories TC, TL and CT;
- accesses in reading and writing to the same memories;
- establishing and cutting of the connection.

The connections between the device CHP and the system in which it is inserted are represented in details in figure 2. Moreover are shown the two parts the device is divided in, called CHPUP and CHPDW suitable to perform the operations previously described on the cell flow which goes from interface Pb to interface W and vice versa, respectively.

The connection DINPb arriving from interface Pb is composed by the following connections:
- one unidirectional bus 1 set up by eight wires by means of which the bytes of the cells are transferred;
- a wire 2 suitable to receive a signal indicating that the first byte of a cell is present;
- a wire 3 suitable to receive a continuous timing signal to be used to sample the data transiting on bus 1;
- a wire 4 suitable to receive a signal indicating the validity of the byte present on bus 1.

In case of a data flow of 155.520 Mbit/s through interface Pb (fig. 1), the maximum frequency of the continuous timing signal on wire 3 is equal to 19.44 MHz.

the communication between CHP and the memory TC (fig. 1), independent on the type of implementation of the memory itself, takes place by means of the following connections:
- a multiplexed bidirectional bus 5 set up by 17 wires which carries data, addresses and a bidirectional parity bit;
- a control bus 6 which, in addition to the normal management signals of a RAM memory, carries a 3 bit code word carrying out the function of secondary address as it will integrate the primary address present on bus 5.

The communication between CHP and the memory TL (fig. 1) independently on the type of implementation of the memory itself takes place by means of the following connections:
- a multiplexed bidirectional bus 7 set up by 34 wires which carries data, addresses and two parity bits on data contained or written in said memory TL;
- a control bus 8 carrying the normal management signals of a RAM memory.

The communication between CHP and the unit PU (fig. 1) occurs through a data bus 9 directed towards PU and a data bus 10 directed towards CHP. Bus 9 carries the following signals:
- a cell beginning signal;
- a data validation signal;
- two signals corresponding to the value of two bits located in the cell header;
- an activation signal of the global flow;
- two activation signals of the unit PU with implicit or explicit priority.
Bus 10 transports the following signals:
- a signal which, if equal to 1, indicates the conformity of the sub-flow at low priority (or of the total flow) at the negotiated traffic parameters;
- a signal which, if equal to 1, indicates the conformity of the sub-flow at high priority at the negotiated traffic parameters;
- a signal which, if equal to 1, indicates the conformity of the sub-flow at high priority at the negotiated traffic parameters;
- a validation signal suitable to validate the two previous signals.

The connection DOUTW directed to the interface W, is set up by the following connections:
- a unidirectional bus 11, set up by 8 wires, on which are transferred the bytes of the cells transmitted towards the connection network;
- a unidirectional service bus 12, set up by two wires, on which are transferred the first four ATM header bytes of said cell and an internal routing code;
- a wire 13 which carries a signal indicating that on bus 11 the first byte of the cell is present;
- a wire 14, which carries a continuous timing signal suitable to sample the data transiting on bus 11.

On the wire 15 arriving from the interface W the device CHP is also supplied with a synchronized timing signal with the clock signal used as reference in the connection network. Its frequency coincides with the maximum tolerable transfer rate on bus 11 of the interface W.

The connection DINW arriving from the interface W is set up by the following connections:
- a unidirectional bus 16, set up by 8 wires, on which the bytes of the cells arriving from the connection network are transferred;
- a wire 17, which carries a signal indicating that the first byte of a cell on bus 16 is present;
- a wire 18 which carries a continuous timing signal to be used to sample the data transiting on bus 16;
- a wire 19 which carries a signal directed towards the element transmitting the cells to CHP. This signal indicates the indisposition of the CHP to receive cells which are different from the empty cells in the internal format of the system. By means of this signal the transmission of useful cell addressed to the CHP is therefore interrupted, forcing the transmission of empty cells in the internal format of the system.

In case of a data flow of 320 Mbit/s in the connection network the maximum frequency of the timing signals on the wires 14, 15 and 18 is equal to 40 MHz.

The communication between CHP and the microprocessor MC (Fig. 1) uses connections and signals of the general type which allow the interfacing with whatever type of microprocessors. However the present embodiment enables the direct interfacing of the device CHP with the Motorola microprocessor MC68302.

The used connections are the following:
- a unidirectional address bus 20 for the access to the internal registers of the CHP;
- a bidirectional data bus 21 set up by 16 wires;
- a connection 22 carrying control signals.

Independently on the type of implementation of the memory itself, the communication between CHP and the memory CT (Fig. 1) takes place through the following connections:
- a multiplexed bidirectional bus 23 set up by 17 wires, which carries data, addresses and a parity bit on the data contained or written in the memory CT;
- a control bus 24 carrying the normal management signals of a RAM memory.

The connection DOUTPb directed towards the interface Pb is set up by the following connections:
- a unidirectional bus 25, set up by 8 wires by means of which the bytes of the valid cells or of cells of a different type (idle unassigned, traffic) towards the physical layer interface Pb are transferred (Fig. 1);
- a wire 26 which carries a signal indicating that on bus 25 the first byte of a cell is present;
- a wire 27 which carries a continuous timing signal to be used to sample the data transiting on bus 25;
- a wire 28 which carries a signal indicating the validity of the byte present on bus 25.
In case of a data flow of 155.520 Mbit/s through the interface Pb (Fig. 1), the maximum frequency of the continuous timing signal on wire 27 is equal to 19.44 MHz.

The device CHP is moreover connected to the interface Pb through:
- a wire 29 which carries a synchronized timing signal with the clock signal used as reference in the transmission system. Its frequency coincides with the maximum tolerable transfer rate on bus 25 of the interface Pb;
- a wire 30 which carries a mask signal indicating the transmission capacity of the system used at physical layer.

If the physical layer uses the frame STM1 of the synchronous hierarchy (physical layer ATM based on SDH), the signal on wire 30 discriminates 10 periods of the signal 29 on 270.

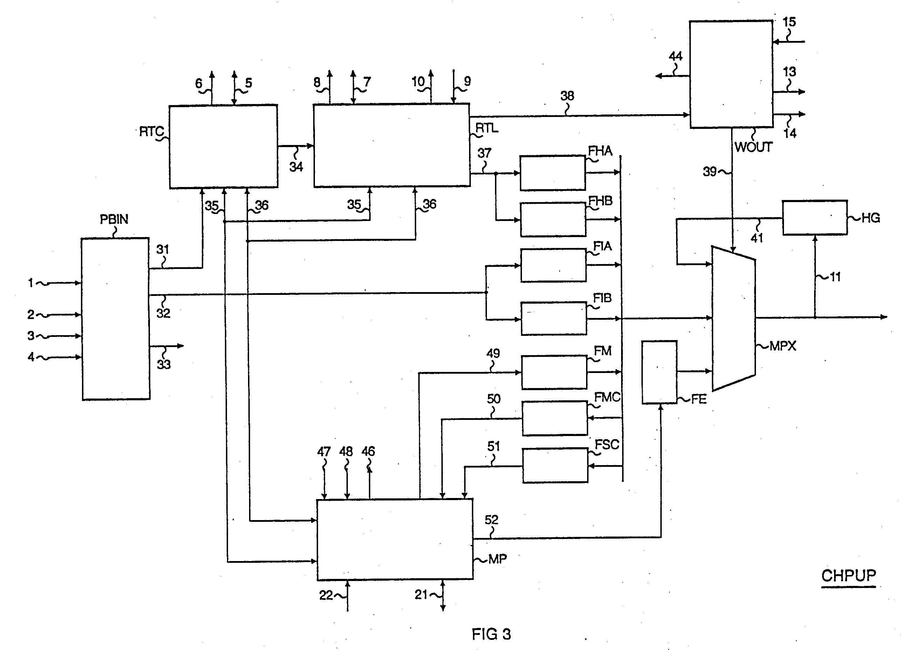

The architecture of the part of the device called CHPUP is shown in figure 3.

Referring to this figure, the data flow is analyzed which goes from the interface Pb (Fig. 1) towards the interface W. The input data flow carried by bus 1 is stored in a unit called PBIN, performing the following functions:
- management of the timing signal, present on wire 3, and of the signal indication the validity of the byte, present on wire 4, so as to satisfy the specifications of frame STM-1 of the synchronous SDH hierarchy;
- control of the HEC byte (header error control) if abled through suitable writing of an internal register by the microprocessor;
- correction of the header bytes in case of a single error;
- signalling to the microprocessor of a double error in the header bytes;
- checking of the cell format through a test on the signal on wire 2 and consequent rejection of the same if it is set up by a number differing from 53 bytes;
- extraction of the header bytes made available on the unidirectional bus 31 in order to be able to carry out the label conversion;
- extraction of the information bytes, made available on the unidirectional bus 32, set up by 8 wires and their storage in two FIFO memories labelled FIA and FIB, managing them according to their occupation condition;
- generation of internal timing signals made available on the connection 33.

The unit PBIN is mainly set up by two finite state machines.

A finite state machine is suitable for the correction of the header bytes in case of single error being based on a polynomial which is the result of the control on the HEC byte and which carries the information of which bit and on which header byte the error is present. The other finite state machine is suitable to check the format of the cell. The implemented algorithm checks the presence of the cell start signal on wire 2 every 53 bytes and distinguishes therefore the cell with a number of bytes different from 53. In case of error the finite state machine evolves towards a state inside of which a new synchronism is sought in order to start again correctly the algorithm. In case it is not possible to find a moment of synchronism the microprocessor will be informed of this event.

The following block met by the data flow is called RTC and it is suitable for the following functions:
- addressing of the memory TC (fig. 1) using the data present on the bus 31;
- management of the reading and writing operations on behalf of the microprocessor in the memory TC;
- management of the control signal exchange and of the data with the external memory TC by means of the wires 5 and 6, respectively.

The unit RTC is set up by an finite state machine suitable for the cell header transcoding operations and for the reading and writing operations required by the processor. The header construction rule in internal format depends on the configuration of the CHP as well as on the cell type in question.

The value contained in the header corresponds to a compressed internal identifier (ICI) made available outside the block through the bus 34. The ICI is expressed on a number of bits minor than those foreseen for the whole of the fields VPI and VCI contained in the header (24 bits at the UNI and 28 bits at the NNI) and sized on the maximum number of VPI and/or VCI which may be simultaneously active on the ATM input link (for example 12 bit, corresponding to a 4096 VPIs and/or VCIs being simultaneously active for a link of 150 Mbit/s.

The use of an ICI constrains to realize the operation of constructing new ATM labels (at least for the part related to the VPI and/or VCI translation in the output CHP.

The implemented algorithm proposes itself to obtain the Compressed Internal Identifier which is afterwards used to have access to the translation memory TL (Fig. 1) through a following block RTL.

The total of the VPI and VCI field values has an importance in the following cases:
- VCI permutation/switching to identify the VCI
- VPI permutation/switching to identify the Operation And Maintenance (OAM) VCI.

In case of VPI permutation/switching for the flows which are not OAM, a transcoding of the field VPI and VCI is not carried out but just of the VPI value.

There is therefore a first layer allowing to identify if the cell must be considered to belong to a VPI or to a VCI.

In the first case the ICI is already available at this layer. However the research is going on by means of the values VPI and VCI with the aim to identify the OAM cells, as those may require a specific processing.

In the second case it is instead necessary to carry out a research to obtain the included identifier associated to the VCI. This research constitutes the properly said interconversion phase.

The transcoding algorithm of the total of the values VPI and VCI used to carry out the research of the included identifier consists in the implementation of a structure at 4 layers in which each layer consists in the identifier associated to one of the active VCIs. On the basis of a given value of VPI and/or VCI it is possible to run through all layers of said whole of VPIs and VCIs and to get in this way the included identifier of the VCI.

Moreover in order to assure the recognition and the differentiation of the OAM flows of VCI the research is carried on for a further layer using the bits of the PTI field inside the header.

In total the passage is developed on 6 layers, the first and last one of them belonging to separate structures, and in its whole it makes the compression of the values VPI and VCI possible which identify an active VCI.

The above-mentioned finite state machine has the task to manage the temptation of sending user cells for not associated, flows by means of the use of an internal field of the memory TC (Fig. 1). In case the flow is not previously associated the cells belonging to this flow will be rejected and the microprocessor will be informed through writing in the internal register. This one manages moreover the control and the generation of the parity on data contained in the memory TC.

The last functionality implemented in the algorithm consists in the management of the reading and writing cycles of the memory TC on behalf of the microprocessor, which will put an address on the bidirectional bus 35 and through the bidirectional bus 36 it will transmit or receive the data to be written or read in the abovementioned memory. This operation will be activated through an appropriate command stored in an internal register and the finite state machine, in a predetermined instant, will provide for the execution informing the microprocessor at the end of the operation.

The unit RTL is suitable for the construction of the internal header of the cell and the control of the flow parameters associated to it. Also for this unit the preponderant part is set up by a finite state machine which uses the ICI present on wire 34 to address the memory TL (Fig. 1) with the aim to retrieve the data to be inserted in the cell header. Reading the memory TL, the implemented algorithm provides for the retrieval of the information which will be inserted into the cell header.

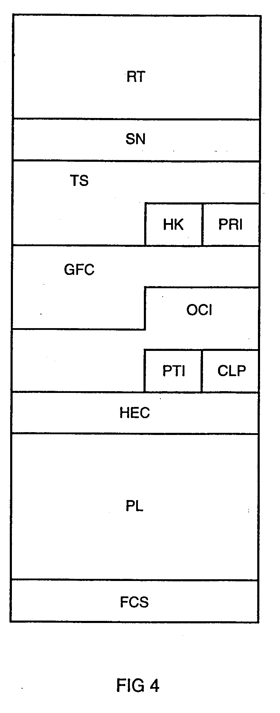

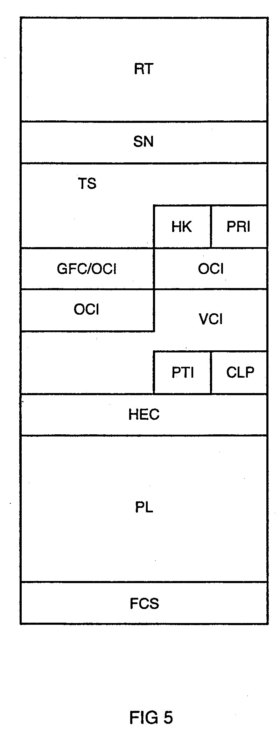

Referring to the figures 4 and 5 related to the format of the cell inside the system of switching of VCI and VPI, respectively, it is possible to state that the first 15 bytes set up the above-mentioned header, 48 bytes that set up the information field PL and one byte FCS for the detection of the errors of the not variable parts of the cell through a cyclic redundancy code. More precisely, the header is set up by:
- seven bytes, contained in the field RT, related to the routing of the cell in the connection network;
- one byte SN containing a progressive counter for each cell belonging to the specific connection sent to the connection network;
- a field TS related to a system clock;
- a field HK related to the receiver of the cell;
- a bit PRI related to the priority of the cell inside the system;
- a field OCI, representing a compressed identifier which will be used for the construction of the ATM layer header of the cell.

To complete the description of the internal header of the cell, it is necessary to render explicit the following fields:
- a field GFC, retrieved from the header of the ATM layer cell in case the device is placed in the UNI. In the contrary case said field will contain insignificant data in case of VCI switching (Fig. 4) or it will contain the field OCI in case of VPI switching (Fig. 5);
- a field VCI, retrieved from the header of the ATM layer cell in case of VPI switching (Fig. 5) or said field will contain the compressed identification OCI in case of VCI switching (Fig. 4);
- two fields PTI and CLP retrieved from the header of the ATM layer cell and related to the management of the cell belonging to a flow OAM or of metasignalling, and to the loss priority of the cell inside the system, respectively;
- a field HEC, related to the correction code for the errors existing in the header of the cell in the internal format calculated by the device.

The algorithm implemented in the block RTL is not just limited to the construction of the cell header, but it manages some further functionalities:
- counting the cells belonging to the same connection and which are processed by the device (tariffing function);
- counting the cells belonging to the same flow and which are eliminated for violation of the agreed traffic parameters;
- managing the control and the generation of the parity on data contained in the memory TL;
- managing the reading and writing cycles of the memory TL on behalf of the microprocessor, which will put an address on the bidirectional bus 35 and through the bidirectional bus 36 it will transmit and receive the data to be written or read in the above-mentioned memory. This operation will be activated by means of an appropriate stored command in an internal register, and the finite state machine, in the predetermined time portion, will provide for its execution informing the microprocessor about the end of the operation;
- storage through the unidirectional bus 37 the header of the cell in internal format in the memory FIFO, indicated by FHA and FHB of Fig. 3, managing the relative writing commands on the basis of their state of occupation;
- transmitting through the wire 38 a validation signal of the information stored in FHA and FHB;
- managing through the wire 9 the activation of an external unit for the control of the traffic parameters related to the connection making available through this wire the priority of the cell under examination and some ATM layer header fields of the cell itself;
- managing through the wire 10 the answer to the control of the traffic parameters interfering in an appropriate way in order to reduce the priority of the cell under examination and eventually eliminating it;
- manage the exchange of the control signals and of the data with the external memory TC through the wires 7 and 8, respectively.

The unit WOUT has the task to manage the cell flow to be sent to the interface W (Fig. 1) or to the microprocessor and the related timing signals. Its task consists in the retrieval of the receiver of the cell under examination which is stored in the FIFO FHA and FIA, or FHB and FIB.

The algorithm implemented in WOUT, consisting essentially in a finite state machine, analyzes wire 38 and the field HK to distinguish if the cell must be transmitted to the interface W or to the microprocessor. As an alternative, it transmits the cell stored by the microprocessor in a memory FIFO FM to the interface W. In case of absence of cells to be transmitted to the above-mentioned interface the finite state machine provides to send a filling cell stored by the microprocessor in the memory FIFO FE at the moment of starting off the device through wire 52.

The above-described operations are carried out through the use of the logic multiplexing unit MPX managed by the unit WOUT by means of the wire 39. Moreover through this unit is inserted the byte for the HEC error correction code (Fig. 4, 5) calculated by the block HG, which receives through the wire 11 the data on which calculate the code and through the wire 41 it transmits it to the unit MPX for its insertion inside the cell header.

In case of cells to be transmitted to the microprocessor, the unit WOUT analyzing the field HK distinguishes if the cell has to be transmitted to the processor for diagnostic reasons or if it is a metasignalling, signalling or OAM cell. In the first case the unit WOUT provides to memorize this cell in the memory FIFO FSC, in the other cases the cell is stored in the unit FMC, set up by seven memories FIFO, which writing is managed by the unit WOUT on the basis of their state of occupation.

As a final analysis the unit WOUT, through a system clock signal on wire 15, provides to generate on wire 14 the timing related to the data transmitted to the interface W, on wire 13 a cell start signal and on wire 44 different timings inside the device.

The unit MP represents the interface logic between the device and the external microprocessor. By means of the wire 46 this unit transmits the various command to the logics inside the device receiving through the wires 47 and 48 the internal state of the device and/or the possible errors revealed by the various units. By means of wire 49 the unit MP memorizes in the memory FIFO FM a cell to be transmitted to the interface W and through the wires 50 and 51 it is able to read from the memory FIFO of the units FMC and FSC, managing the state of occupation, the cells processed by the device and assigned to the microprocessor.

The unit MP manages the exchange of the control signals and of the data with the external microprocessor through the 22 and 21, respectively.

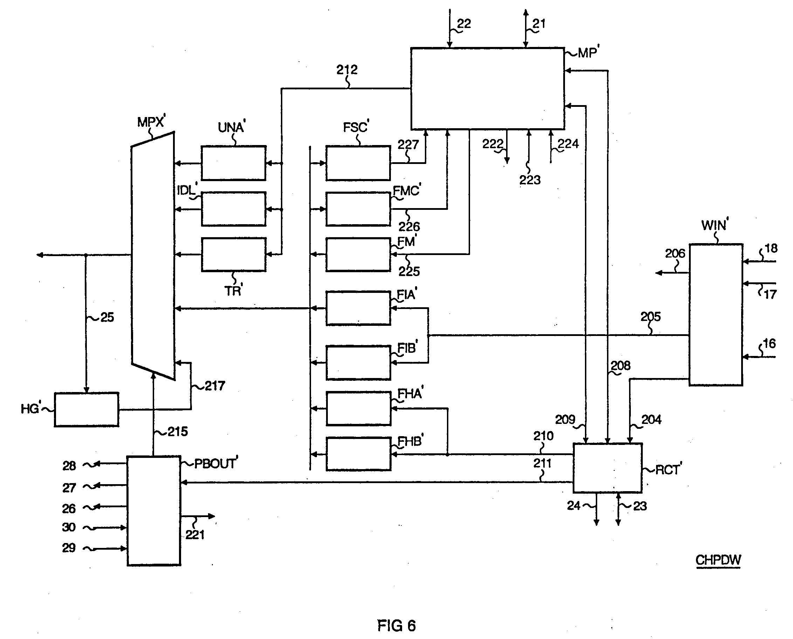

The architecture of the part of the device called CHPDW is shown in Fig. 6. Referring to this figure, the flow of data transiting from the interface W (Fig. 1) towards the interface Pb is analyzed. The incoming data flow carried by bus 16 is stored in a unit called WIN' dedicated to the following functions:
- management of the timing signal present on wire 18 and of the signal indicating the first byte of the cell present on wire 17;
- control of the byte HEC (Header Error Control), if qualified, through appropriate writing of an internal register by the microprocessor;
- correction of the header bytes in case of a single error;
- signalling towards the microprocessor of a double error in the header bytes;
- checking of the cell format by means of testing on the signal on wire 17 and following elimination of the same if it is set up by a number of bytes different from 64;
- extraction of the output identification bytes of the connection (OCI) made available on the unidirectional bus 204 in order to be able to carry our the ATM label construction;
- extraction of the information bytes made available on the unidirectional bus 205 set up by 8 wires and their storage in two memories FIFO indicated by FIA' and FIB' managing them on the basis of their state of occupation;
- generation of internal timing signals made available on the link 206.

The unit WIN' is mainly set up by two finite state machines. A finite state machine is assigned to the correction of the header bytes in case of single error on the basis of a polynomial which is the result of the control of the byte HEC and which carries the information of which bit and on which header byte the error is present.

The other finite state machine is suitable for the check of the cell format. The implemented algorithm examines the presence of the cell start signal on wire 17 every 64 bytes and therefore distinguishes the cells with a byte number different from 64. In case of error, the finite state machine evolves towards a state inside of which a new synchronism is sought for in order to start again correctly the algorithm. In case there is no possibility to find again a synchronism instant, the microprocessor will be informed about this result.

The following unit met by the data flow is called RCT' and is assigned to the cell ATM header construction and to the control of certain flow parameters associated to this. Also for this unit the prevailing part is set up by a finite state machine which uses the OCI present on wire 204 to address the memory CT (Fig. 1) with the aim to retrieve the data to be inserted in the cell header.

The algorithm implemented in the unit RCT' is not only limited to the construction of the cell header, but it manages certain further functions:
- counting the cells belonging to the same connection which are received bay the devise with a sequence which is not systematic;
- counting the missing cells and belonging to the same connection;
- counting the cells transmitted to the interface Pb and belonging to the same connection;
- managing the control and the generation of the parity on the data contained in the memory CT;
- managing the reading and writing cycles of the memory CT on behalf of the microprocessor which will put an address on the bidirectional bus 208 and through the bidirectional bus 209 it will transmit and receive the data to be written and read in the above-said memory. This operation will be activated by means of an appropriate command stored in an internal register and the finite state machine, in the predetermined time interval provides for its execution giving the answer of end of operation to the microprocessor;
- storage through the unidirectional bus 210 the ATM format cell header in the memories FIFO indicated by FHA' and FHB' of Fig. 6 managing the related writing command on the basis of the state of occupation;
- transmitting through wire 211 a validation signal for the data stored in FHA'-FIA' and FHB'-FIB';
- managing the exchange of control signals and of the data with the external memory CT through the wires 24 and 23, respectively.

The unit PBOUT' has the task to manage the cell flow to be transmitted to the interface Pb (Fig. 1) or to the microprocessor and the relative timing signals. Its task consists in retrieving the receiver of the cells under exam which is stored in the FIFO FHA' and FIA' or FHB' and FIB'.

The implemented algorithm analyzes the wire 211 and the field HK to distinguish if the cell has to be transmitted to the interface Pb or to the microprocessor. As an alternative, it transmits the cell stored by the microprocessor in the memory FIFO FM' to the interface Pb.

In case of absence of cells to be transmitted to the above-said interface, the finite state machine will provide for the transmission of one of the three cells stored by the microprocessor in the memories FIFO UNA', IDL', TR' at the set up step of the device through wire 212.

More precisely in the unit UNA' the microprocessor stored an ATM cell of the unassigned type, in the unit IDL' it memorizes an ATM cell of the idle type and in the unit TR' it memorizes a test cell. The information which one of these three cells the device has to transmit to the interface Pb in absence of cells is stored in an internal register; as an alternative the device may, through the wires 29 and 30, manage the absence of cells as described in the frame STM-1 of the synchronous hierarchy (ATM physical layer based on SDH).

The above-described operations are carried out by the use of the logic multiplexing unit MPX' managed by the unit PBOUT' by means of the wire 215. Moreover through this unit is inserted the byte for the error correction code HEC calculated by the unit HG', which receives through the wire 25 the data on which calculate the code, and through the wire 217 it transmits it to the unit MPX' for its insertion inside the cell header.

In case of cell to be transmitted to the microprocessor, the unit PBOUT' distinguishes if the cell has to be sent to the processor for diagnostic reasons or if it is a metasignalling or signalling cell. In the first case the unit PBOUT' provides for the storage of this cell in the memory FIFO FSC', in the other cases the cell is stored in the unit FMC' set up by seven FIFO memories, which writing is managed by the unit PBOUT' on the basis of their state of occupation.

In last analysis, through a clock signal of the transmission system on wire 29 and a signal indicating its availability to receive data on wire 30, the PBOUT' unit provides on the wire 27 for the generation of the timing related to the data transferred to the interface Pb, on wire 26 a cell start signal, on wire 28 a signal indicating the validity of the data transferred and on the wire 221 various timings internal of the device.

The unit MP' represents the interface logic between the device and the external microprocessor. By means of the wire 222 this unit transmits the various commands to the internal logics of the device receiving through the wires 223 and 224 their internal state of the device and/or the possible errors revealed by the different units. By means of the wire 225 the unit MP' memorizes in the memory FIFO FM' a cell to be transmitted to the interface Pb and through the wires 226 and 227 it is able to read from the memories FIFO of the units FMC' and FSC', managing their state of occupation, the cells processed by the device and assigned to the microprocessor.

The unit MP' manages the exchange of the control signals and of the data with the external microprocessor through the bus 21 and 22, respectively.

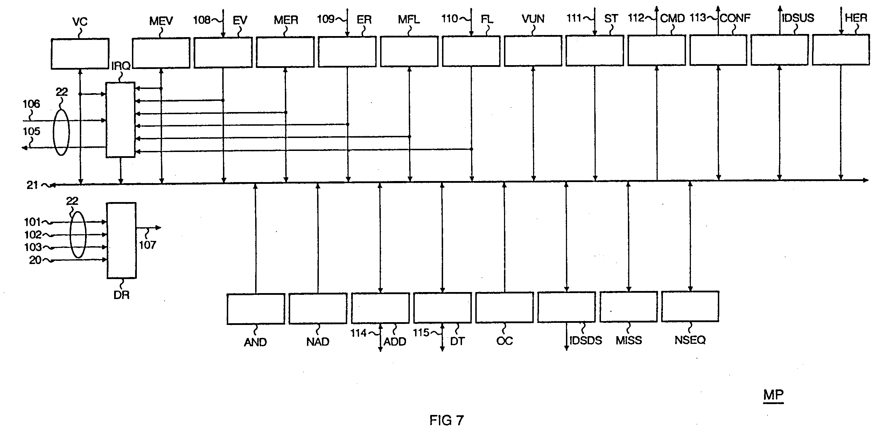

Fig. 7 shows the structure of the interface unit (MP of Fig. 5 and MP' of Fig. 6) through the microprocessor and the device CHP.

The unit called DR is prepared for the management of the microprocessor control signals present on the wires 101, 102, 103 belonging to bus 22 (Fig. 2) which represent respectively the selection signal of the device, the signal validating the data present on the bidirectional bus at 16 wires 21 and the signal indicating if the cycle in progress is a reading or a writing cycle. Another function of this unit consists in decoding the address of the internal register the microprocessor intends to get access; this address is put on the unidirectional bus at 5 wires labelled 20 and by means of the wire 107 the decoding logic will provide for the qualifying in reading or writing the internal register of the device.

Now will be analyzed the various units represented in Fig. 7 which correspond to the internal registers of the device.

The unit VC contains the values of the interruption vectors and is written through wire 21, by the microprocessor at the set up step of the component.

Through the wire 108 the unit EV collects inside of itself the internal signalling to the device such as arrival of cells at the interfaces, carried out transmission of cells to the interfaces and other events. The content of this register may be read by the microprocessor through the bus 21 by means of a interrogation reading cycle or by means of a reading cycle on interruption.

The unit MEV contains in its interior a mask written by the microprocessor through the wire 21 by means of which the events stored in the unit EV are qualified to generate through the unit IRQ an interruption cycle.

One function similar to this unit is implemented in the units MER and MFL related to the signallings of internal errors (unit ER) and to the failures (unit FL).

The unit ER collects in its interior the signallings related to error situations happening in the device. Through the wire 109 the data related to autodiagnosis counter overflow, parity errors on the external memories and other are carried.

The microprocessor may have access to this source in reading through the bus 21 by means of interrogation or on interruption.

The unit FL collects through the wire 110 all failure signallings occurring in the device.

The unit IRQ is assigned to the matching between the various internal signallings stored in the units EV, ER and FL and the masks stored in the units MEV, MER, MFL, respectively. The result of this confrontation, if positive, is that the unit IRQ starts a interruption cycle through wire 105 and, through wire 106 managed by the microprocessor, this cycle may be concluded by the transmission to the microprocessor of the corresponding interruption vector stored in unit VC. The wires 105 and 106 belong to bus 22 (Fig. 2). The unit IRQ manages moreover the priority of the three types of interruption related to the events stored in the units EV, ER and FL, respectively.

Unit VUN is assigned to the counting of the cells arrived at the interface Pb and related to not activated links.

Through wire 111, unit ST collects the signallings corresponding to operation commands such as the reading/writing of external memories etc.

Unit CMD contains in its interior the various commands the microprocessor transmits to the device and which correspond to operations on the external memories, setting up, etc. Through wire 112 the various commands are carried to the internal logic which provides for their execution.

Unit CONF includes the internal configuration for the device consisting in the qualification or not of the various control logics such as the HEC code control/correction, control/generation of the parity etc.

The unit IDSUS contains the ATM header of the cell arrived from the interface Pb which will be duplicated and stored for diagnostic reasons in the unit FSC (Fig. 3) after having been processed by the device.

Unit HER includes the ATM header of the cell of not activated link.

The units AND and NAD include in their interior a fixed value for diagnostic reasons on the bus of the microprocessor 21.

Unit ADD contains the address of the external memory the microprocessor intends to get access to. Through the wire 114, this unit will transmit the address to the appropriate internal logic corresponding to the interested memory (TC, TL, CT, Fig. 1).

Unit DT contains the data the microprocessor intends to write or which has been read from the external memory. Through the wire 115 this unit will transmit or receive this data at the corresponding memory.

Unit OC is prepared for the counting of the cells arrived at the interface W and corresponding to not activated links.

Unit IDSDS contains the value of the OCI of the cell, which arrived from the interface W, will be duplicated and stored for diagnostic reasons in the unit FSC' (Fig. 6), after having been processed by the device.

Unit MISS is used to count the total number of cells missing in the flow arriving from the interface W. The device reduces the value contained in this register by the quantity of missing cells from the flow, the microprocessor can read this value for diagnostic reasons and can write this value so as to impose a maximum threshold to the number of cells missing in the flow.

In unit NSEQ is used for the counting of the total number of cells out of sequence from the flow arriving from the interface W. The microprocessor may read this value for diagnostic reasons and may write it to impose a maximum threshold for the cells out of sequence.

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. Device for processing ATM functions (CHP) able to exchange ATM cells with a physical layer interface (Pb) and with an interface to the switching network (W), by subjecting the cells in ATM format to the header translation in order to convert them:
from ATM format into cells in a proprietary format and implementing a predefined traffic parameter control algorithm (PU) and then transmit them to said interface to the switching network (W), and analogously,
from said proprietary format into cells in ATM format and than send them to the physical layer interface (Pb), and communicating with a control microprocessor (MC) through interface logics (MP, MP'),
characterised in that it comprises a first part (CHPUP) and a second part (CHPDW), said first part (CHPUP) being able:
a1) to receive the cells from said physical layer interface (Pb);
b1) to check the correctness of the header data;
c1) to store the payload of the cells;
d1) to perform the compression of predetermined fields of the cell header (VCI, VPI, PTI) in order to obtain an internal compressed identifier(34);
e1) to build up the internal cell header;
f1) to control the flow parameters associated to the cell, and
g1) to send the cells either to the microprocessor or to the interface to the switching network (W), or to both of them according to local specific data associated to the cells,
said second part (CHPDW) being able:
a2) to receive the cells flow (16) from said interface to the switching network (W);
b2) to check the correctness of the header data;
c2) to store the payload of the cells;
d2) to build up the new ATM header;
e2) to control the cell flow counting the cells belonging to the same connection with an unordered sequence, or which are missing, or which are sent to said physical layer interface (PB), and
f2) to send the cells either to the physical layer interface (PB) or to the microprocessor (MC) or to both of them according to local specific data associated to the cells.

2. Device as claimed in claim 1, characterized in that said first part (CHPUP), which is able to perform said header translation in order to convert the ATM cells from ATM format into said predetermined proprietary format and than send them to said interface to the switching network (W), includes:
- a first block (PBIN), including two finite state machines, receiving the cell flow (1) and performing the following functions:
- management of the timing signal (3) and of the signal indicating the validity of the byte (4);
- control of the HEC byte;
- correction of the header bytes in case of single error;
- signalling towards the microprocessor (MC) of a double error in the header bytes;
- check of the cell format;
- extraction of the header bytes in order to enable the label translation;
- extraction of the payload bytes (32);
- generation of internal timing signals (33);
- first FIFO memories (FIA, FIB) for storing the payloads of the cells extracted from said first block (PBIN);
- a second block (RTC) mainly including a finite state machine able to perform the transcoding of the cell header obtaining an internal compressed identifier (34) by means of the following operations:
- addressing (31) of the external transcoding memory;
- management of the read and writ operations on behalf of the microprocessor in the external transcoding memory;
- management of the exchange of control signals (5) and data (6) with the external transcoding memory;
- a third block (RTL) mainly including a finite state machine and suitable for building up the internal cell header and of controlling the flow parameter associated to the cell by using the compressed internal identifier (34) to address the translation memory (TL) with the aim to retrieve the data to be inserted in the cell header and carrying out the following further functions:
- counting the cells belonging to the same connection and to the same flow;
- managing the read and writ cycles of the translation memory (TL) on behalf of the microprocessor and the related parity checks;
- storing (37) the header of the cells in internal format;
- managing (9, 10) the control of traffic parameters related to the connection and of the cell priority;
- managing the exchange of control signals (7) and data (8) with the external transcode memory (TC);
- second FIFO memories (FHA, FHB) for storing the internal format cell header;
- a fourth block (WOUT) able to manage the cell flow to be sent to the interface to the switching network (W) or to the microprocessor (MC), identifying the destination of the cell and generating the timing (14) related to the transferred data, a cell start signal (13) and internal timings (44);
- a third FIFO memory (FE) for storing stuffing cell;
- a fourth FIFO memory (FM) for storing cells from the microprocessor (MC);
- a first logic multiplexing block (MPX), managed by the fourth block (WOUT), which transfers to the interface to the switching network (W) the cells contained in said FIFO memories (FM, FHA, FIA, FHB, FIB) or the stuffing cell contained in said third FIFO memory (FE), enabling moreover the insertion of an error correction code;
- a fifth block (HG) for calculating the error correction code on the cell flow outputted from the first logic multiplexing block (MPX);
- a sixth FIFO memory (FSC) for storing cells to be sent to the microprocessor (MC) for diagnostic purposes, controlled by said fourth block (WOUT);
- a sixth block (FMC) comprised of seven FIFO memories, for storing metasignalling, signalling and OAM cells, and controlled by said fourth block (WOUT);
- a first interface logic (MP) for exchanging control signals and data with the first part (CHPUP) and the microprocessor (MC).

3. Device as claimed in claim 1, characterized in that said second part (CHPDW), able to perform said header translation in order to convert the cells from proprietary format into cells in ATM format and than send them to said physical layer interface (Pb), includes:
- a seventh block (WIN'), mainly including two finite state machines, receiving the cell flow (16), and performing the following functions:
- management of the timing signal (18) and of the signal indicating the first cell byte (17);
- control of the HEC byte;
- correction of the header bytes in case of single error;
- signalling towards the microprocessor (MC) of a double error in the header bytes;
- checking of the cell format;
- extraction of the connection identifier (OCI) bytes (204) output in order to be able to carry out the ATM label construction;
- extraction of the payload bytes (205);
- generation of internal timing signals (206);
- seventh FIFO memories (FIA', FIB') for storing the payload of cells extracted from said seventh block (WIN');
- an eighth block (RCT') mainly including a finite state machine suitable building up the ATM header of the cell and of controlling flow parameters associated to the cell by means of the following operations:
- addressing (208) of the switching memory (CT) by using the field OCI (204) of the cell;
- management of the read and writ operations on behalf of the microprocessor in the switching memory (CT) and the related parity checks;
- management of the exchange of control signals (24) and data (23) with the switching memory (CT);
- counting of the cells belonging to the same connection with an unordered sequence, which are missing or which are sent to said physical layer interface (Pb);
- storage (210) of the ATM format cell header;
- transmission (211) of a validation signal for the stored information;
- eighth FIFO memories (FHA', FHB') for storing the ATM format cell header under the control of said eighth block (RCT');
- a ninth block (PBOUT') able to manage the cell flow to be sent to the physical layer interface (Pb) or to the microprocessor (MC), identifying the destination of the cell and generating the timing (27) related to the transferred data, a cell start signal (26) and internal timings (221);
- a ninth FIFO memory (FM') for storing cell from microprocessor (MC);
- a tenth FIFO memory (UNA') for storing cells of unassigned type from the microprocessor (MC);
- an eleventh FIFO memory (IDL') for storing idle type cells from the microprocessor (MC);
- a twelfth FIFO memory (TR') for storing test cells from the microprocessor (MC);
- a second logic multiplexing block (MPX') managed by the ninth block (PBOUT'), which transfers to the physical layer interface (Pb) the cells contained in said FIFO memories (FM', FHA', FIA', FHB', FIB') or the cells contained in said FIFO memories (UNA', IDL', TR') enabling moreover the insertion of an error correction code;
- a tenth block (HG') for calculating an error correction code on the cell flow outputted from the second logic multiplexing block (MPX');
- a thirteenth FIFO memory (FSC') for storing cells to be transmitted to the microprocessor (MC) for diagnostic purposes, controlled by said ninth block (PBOUT');
- an eleventh block (FMC') including seven FIFO memories for storing metasignalling or signalling cells, and controlled by said ninth block (PBOUT');
- a second interface logic (MP') for exchanging control signals and data with the second part (CHPDM) and the microprocessor (MC).

4. Device for processing ATM functions according to any preceding claims, characterized in that said predetermined proprietary format includes 15 header bytes, 48 payload bytes (PL), and one byte (FCS) for detecting errors of the invariable part of the cell by means of a cyclic redundancy code, said header bytes including:
- seven bytes (RT) related to the routing of the cell inside the switching network;
- one byte (SN) containing a progressive counter for each cell belonging to the specific connection, transmitted to the interface to the switching network (W);
- one field (TS) related to a system clock;
- one field (HK) related to the destination of the cell;
- one bit (PRI) corresponding to the priority of the cell inside the switching system;
- one field (OCI) representing a compressed identifier used for building up the ATM format cell header;
- one field (GFC) containing the corresponding data retrieved in the ATM format cell, in case the device is placed in the user network interface (UNI), or containing insignificant data in case of switching of the virtual channel identifier (VCI), or the above-mentioned field (OCI) in case of switching of the virtual path identifier (VPI);
- a field (VCI) retrieved from the ATM format cell header in case of switching of the virtual path identifier (VPI), or said field contains the above-mentioned field (OCI) in case of switching of the virtual channel identifier (VCI);
- two fields (PTI, CLP) retrieved from the ATM format cell header and corresponding respectively to the cell management belonging to an OAM or metasignalling flow, and to the cell loss priority inside the switching system;
- a field (HEC) related to the correction code of errors in the proprietary format cell header, calculated by the device.
